# FASCICULE DE BREVET EUROPEEN

(11) **EP 2 860 582 B1**
(45) Date de publication et mention de la délivrance du brevet: **09.12.2020**
(21) Numéro de dépôt: 13306405.5
(22) Date de dépôt: 14.10.2013
(51) Int. Cl.: G03B 15/07, G03B 17/53

(54) **Installation pour l'acquisition de portraits photographiques**
Anlage zur Erfassung von Fotoporträts
System for acquiring photographic portraits

(43) Date de publication de la demande: 15.04.2015
(73) Titulaire: PHOTO-ME INTERNATIONAL PLC, Bookham, Surrey KT23 3EU (GB)
(72) Inventeur: Crasnianski, Serge, 1204 Genève (CH); Croll, Christian, 38640 Claix (FR)
(74) Mandataire: Cabinet Laurent & Charras

(56) Documents cités:
- WO-A1-94/26057
- FR-A1- 2 689 355
- US-A- 1 794 142
- US-A- 3 864 708
- US-A- 4 688 105
- US-A- 5 117 283

## Description

### DOMAINE DE L'INVENTION

La présente invention concerne le domaine technique des appareils ou dispositifs permettant la prise de photographies.

Plus particulièrement, l'invention a trait à une installation pour l'acquisition de portraits photographiques, également appelée «photomaton» in France, réalisant des prises de vue photographiques et le développement des photographies de façon automatique, notamment à destination de documents d'identité ou autres.

### ETAT ANTERIEUR DE LA TECHNIQUE

On connait, par exemple du document US 3 864 708, une installation du type en question, qui ne comporte qu'une seule source lumineuse, insatisfaisante pour répondre aux standards de qualité de la photographie exigés à ce jour.

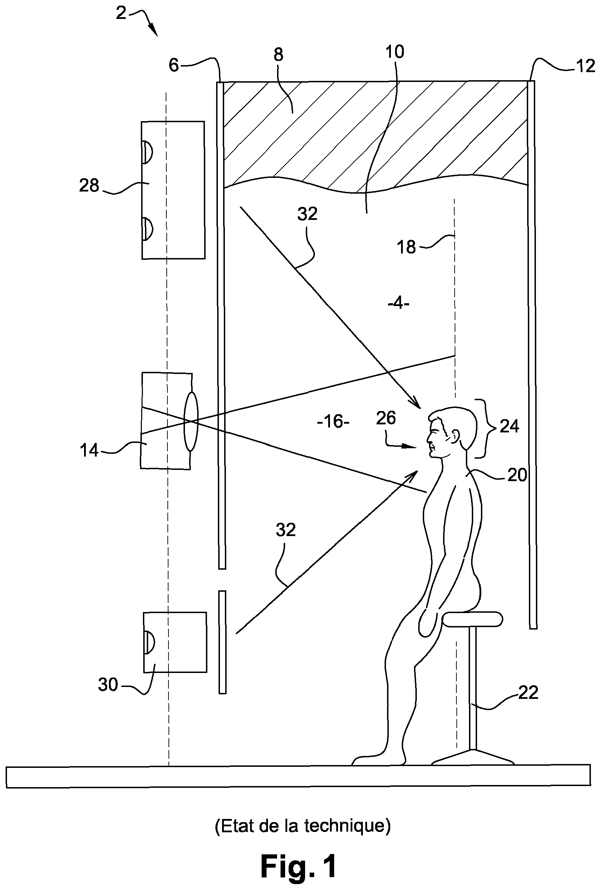

Une autre installation du type en question **2** telle qu'illustrée à la figure 1, comprend une cabine **4** délimitée par quatre parois **6, 8, 10** et **12,** outre par un plafond. Un appareil photographique ou caméra **14** est placé derrière une première paroi **6,** au niveau d'une partie transparente de ladite paroi, de manière à ce que son champ de vision **16** soit orienté vers l'intérieur de la cabine **4** et son plan focal **18** soit présent dans ladite cabine.

Une deuxième paroi **8** latérale de la cabine comprend une ouverture pour permettre à un utilisateur **20** d'entrer dans ladite cabine. Un siège **22** placé en face de l'appareil photographique **14** et à proximité de son plan focal **18,** permet à l'utilisateur de s'asseoir à une distance convenable de l'appareil pour que son portrait photographique soit net.

Des repères visuels situés au niveau de l'appareil aident l'utilisateur à placer son visage selon une position de référence **24,** afin que le portrait de son visage **26** soit de face et centré sur la photographie à réaliser. La position de référence est une zone située au niveau de de l'intersection entre le plan focal **18** et le centre du champ de vision **14** de l'appareil photographique.

Lors de la prise des photographies, une première source lumineuse **28** et une seconde source lumineuse **30** placées derrière des parties transparentes de la première paroi **6,** éclairent le visage **26** de l'utilisateur. Les première et seconde sources lumineuses sont placées respectivement au-dessus et en-dessous de l'appareil photographique. Elles sont orientées et calibrées de manière à éclairer le visage de l'utilisateur dans la position de référence **24,** pour réduire les zones de contraste au niveau de son visage sur les photographies.

La première et la seconde source lumineuses éclairent selon des directions **32** ayant des angles d'incidence prononcés sur le visage de l'utilisateur, respectivement en plongée et contre plongée. Les sources lumineuses sont orientées de manière à éclairer de façon complémentaire les différents reliefs du visage de l'utilisateur, et calibrées de sorte à éclairer avec la même intensité la position de référence. Plus précisément, les ombres formées par la lumière provenant de l'une des sources lumineuses sont éclairées par la lumière provenant de l'autre source lumineuse. Ainsi, la globalité du visage est éclairée de sorte à limiter le contraste du visage sur la photographie.

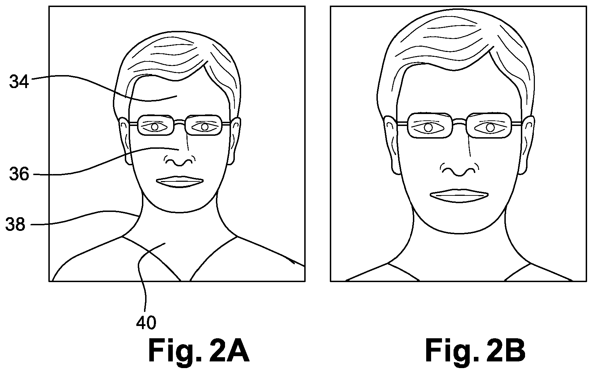

Toutefois, un mauvais positionnement du visage de l'utilisateur, c'est-à-dire un positionnent légèrement décalé par rapport à la position de référence **24,** peut entrainer une surexposition de certaines parties de son visage par rapport à d'autres. En fonction de la morphologie et de la position du visage, des ombres peuvent alors se former et ne plus être éclairées de façon suffisante par l'autre source lumineuse. Il apparait alors des zones contrastées sur la photographie qui ne sont pas souhaitables. Par exemple, comme illustré à la figure 2A, un positionnement trop haut du visage par rapport à l'axe optique de l'appareil photographique, et une légère inclinaison du haut du visage vers la première paroi, favorise une surexposition par la première source lumineuse de zones proéminentes du visage, comme le front **34,** le nez **36** et le menton **38.** Ces zones proéminentes forment des ombres, comme par exemple le menton **38** ou la chemise au niveau du cou **40,** qui sont éclairées avec moins d'intensité car se situant à une distance plus éloignée de la seconde source lumineuse par rapport à la position de référence. Le portrait photographique de l'utilisateur comporte alors des zones fortement contrastées, susceptibles de masquer certaines parties de son visage. Le portait photographique est alors incomplet et susceptible de ne pas satisfaire les exigences requises pour réaliser un passeport ou tous autres documents officiels. En d'autres termes, les portraits photographiques peuvent être inutilisables.

En outre, ces deux sources lumineuses en façade présentent d'autres inconvénients : on observe en effet un effacement du relief du visage qui parait alors pâle, une accentuation de la brillance en présence de sudation accentuée de certaines parties du visage (notamment sur les grandes surfaces planes du visage comme le front).

Afin de palier en partie ces inconvénients, il est connu de prévoir une autre source lumineuse, située au niveau de la paroi **12,** c'est-à-dire positionnée derrière l'utilisateur. Cette source lumineuse a pour vocation de supprimer les ombres portées sur le fond de la cabine, et d'apporter une homogénéité du gris clair sur l'ensemble du fond, par saturation de l'appareil photographique ou de la caméra.

Pour réduire le contraste, une solution peut consister à augmenter la sensibilité du capteur ou de la pellicule de l'appareil photographique. Malheureusement, le bruit de la photographie augmente alors de façon proportionnelle, ce qui se traduit par une baisse de sa qualité. En outre, l'augmentation de la sensibilité accroit l'intensité des zones les plus exposées qui peuvent alors être surexposées. Il peut ainsi apparaître des aplats blancs nuisibles à la qualité de la photographie.

Une autre solution peut également consister à augmenter l'intensité de la lumière éclairant l'utilisateur. Là encore, ce n'est pas idéal car une intensité lumineuse trop importante entraîne une gêne pour l'utilisateur, affaiblit le rendu des couleurs en surexposant son visage et assombrit le fond se situant derrière lui. On obtient alors des photographies où le visage de l'utilisateur est pâle.

Le Demandeur propose une installation pour l'acquisition de portraits photographiques réalisant des photographies de qualité, y compris lorsque le positionnement de l'utilisateur est approximatif devant l'appareil photographique de ladite machine. Une ultérieure installation conventionnelle est divulguée par US 4688105 A.

### EXPOSE DE L'INVENTION

La présente invention concerne une installation, selon la revendication indépendante 1, pour l'acquisition de portraits photographiques, permettant d'éclairer de façon sensiblement homogène le visage d'un utilisateur, lorsqu'il n'est pas positionné précisément selon la position de référence de ladite installation.

A cet effet, l'installation de l'invention comprend une cabine définissant un espace intérieur délimité par une première paroi, dont au moins une partie est transparente ou semi-transparente pour permettre à un appareil photographique ou une caméra agencé derrière ladite partie, de disposer d'un champ de vision dirigé vers l'intérieur de la cabine. L'installation comprend au moins un dispositif d'émission de lumière agencé derrière ladite partie transparente de la première paroi, et apte à éclairer l'intérieur de la cabine.

Selon l'invention, l'installation comprend également un second dispositif d'émission de lumière, comportant au moins deux surfaces émettrices de lumière éclairant l'intérieur de la cabine. Les surfaces émettrices de lumière sont agencées respectivement au niveau d'une deuxième et d'une troisième parois de la cabine, en regard l'une de l'autre et délimitant l'espace intérieur de la cabine. Les surfaces émettrices de lumière sont agencées :
- à gauche et à droite de l'appareil photographique ou de la caméra ; et
- entre la première paroi et le plan focal de l'appareil photographique ou dela caméra ; et
- en dehors du champ de vision dudit appareil.

L'agencement des surfaces émettrices de lumière selon l'invention permet donc d'éclairer une portion du plan focal de l'appareil photographique, se situant dans le champ de vision de l'appareil, selon des angles différents par rapport au premier dispositif d'émission de lumière. Plus précisément, les surfaces émettrices permettent d'éclairer les côtés du visage de l'utilisateur dans la cabine, pour mettre en lumière les zones sous-exposées par ledit premier dispositif d'émission de lumière. Ce second dispositif d'émission de lumière n'éclaire pas directement le champ de vision de l'appareil mais l'éclaire par réflexions multiples et diffuses sur les surfaces réfléchissantes de la cabine, et notamment les deuxième et troisième parois délimitant ladite cabine outre par le plafond.

Le second dispositif d'émission de lumière est largement plus lumineux que le premier dispositif, et le premier dispositif d'émission de lumière voit sa luminosité atténuée, ce qui permet :
- au final, une diminution de l'éblouissement de l'utilisateur ;
- moins de reflet sur les parties prépondérantes du visage de l'utilisateur ;
- moins de reflet sur les lunettes susceptibles d'être portées par l'utilisateur, même si celles-ci ont des surfaces de courbures variables (concave ou convexe) ;
- une meilleure homogénéité du fond car il y a moins d'ombre déporté de l'utilisateur sur le fond.

L'augmentation globale de la luminosité apportée par cette seconde source lumineuse permet également d'améliorer le rapport signal sur bruit du capteur de la caméra ou de l'appareil photographique.

De ce fait, l'éclairement du visage de l'utilisateur est plus homogène car il est réalisé par un nombre plus important de sources de lumière qui sont réparties de façon plus homogène autour de son visage. Les contrastes du visage sont ainsi atténués, et des photographies de qualité sont donc obtenues, y compris lorsque le visage de l'utilisateur n'est pas positionné selon la position de référence de l'installation. En outre, la cabine étant baignée d'une lumière supplémentaire homogène, il est possible de diminuer la sensibilité de l'appareil photographique et/ou l'intensité du premier dispositif d'émission de lumière.

Le champ de vision et le plan focal de l'appareil photographique délimitent une première zone, excluant une seconde zone de la cabine. De façon avantageuse, le second dispositif d'émission de lumière comporte une première et une seconde surfaces réfléchissantes, disposées respectivement sur une deuxième et une troisième paroi délimitant la cabine, et en l'espèce à gauche et à droite de l'utilisateur.

Les surfaces réfléchissantes sont éclairées par une source de lumière agencées entre la deuxième et la troisième paroi. De cette manière, il est obtenu une surface d'émission de lumière de grande dimension, susceptible de favoriser l'homogénéité de l'éclairement.

La source de lumière comporte de préférence un cache optique agencé de manière à ce que la source de lumière éclaire uniquement la seconde zone de la cabine, pour éviter une surexposition de la partie haute du visage de l'utilisateur et un éblouissement de l'appareil photographique

De préférence, une face du cache optique en regard de la source d'émission de lumière, peut être réfléchissante pour permettre à la lumière de se réfléchir en direction de la seconde zone de la cabine. La cinquième surface ou plafond situé au-dessus de l'utilisateur présente également une nature réfléchissante et diffusante, afin d'éclairer de manière homogène le haut du visage de l'utilisateur.

Le second dispositif d'émission de lumière comporte un cache optique agencé entre la source de lumière et chaque paroi portant les surfaces réfléchissantes, pour limiter la valeur de l'angle de dispersion de la lumière éclairant lesdites parois, à une valeur inférieure à 90degrés environ et pour ne pas éclairer la première zone de la cabine (au niveau de la position de référence.

De préférence, les caches délimitent les surfaces réfléchissantes au niveau du champ de vision de l'appareil photographique ou de la caméra pour permettre un éclairement indirect optimal des côtés du visage de l'utilisateur. Ces surfaces sont fortement réfléchissantes mais apportent également une réflexion diffusante.

Afin de permettre un éclairement plus localisé de chaque surface réfléchissante, la source de lumière peut comprendre deux luminaires, chaque luminaire éclairant respectivement la deuxième et la troisième parois de la cabine. Chaque luminaire peut être de forme allongée et comprendre un axe de plus grande dimension sensiblement parallèle à la deuxième et/ou troisième paroi de la cabine. Du fait des propriétés diffusantes de ces surfaces réfléchissantes, ces mêmes surfaces se comportent comme de larges sources lumineuses éclairant uniformément l'ensemble du visage de l'utilisateur de tailles et de positions variables.

L'angle d'inclinaison des deux luminaires par rapport à la cinquième surface (plafond), ainsi que la position du cône d'ombre apporté par le cache optique qui leur est associé doivent être optimisés en fonction :
- du centrage de l'utilisateur vis-à-vis de la cabine,
- de la distance entre l'utilisateur et la seconde paroi ;
- de la distance entre l'utilisateur et la troisième paroi ;
- de la distance entre l'utilisateur et du second dispositif d'émission de lumière ;
- et des propriétés réflectives des secondes et troisièmes parois.

Cette optimisation a pour vocation d'apporter une homogénéité d'éclairage entre les parties latérales gauches et droites du visage. Les angles de ces deux luminaires ont des valeurs optimisées autour de 30 degrés.

L'installation de l'invention peut comprendre une quatrième paroi délimitant l'espace intérieur de la cabine, au moins partiellement transparente. La quatrième paroi est positionnée en regard de la première paroi. Elle est également pourvue d'un dispositif d'émission de lumière apte à éclairer l'intérieur de la cabine. Ce dispositif d'émission peut changer de couleur et de luminosité à volonté pour modifier le fond des photographies. De préférence, ce dispositif d'émission de lumière est composé de trois sources de lumière de couleur rouge, bleu et vert.

Afin d'optimiser l'homogénéité du fond coloré sur les photographies, la quatrième paroi peut comporter une couche de diffusion du dispositif d'émission de lumière additionnel ou munie de propriétés antireflet pour ne pas refléter la lumière provenant de l'intérieur de la cabine peut recouvrir la face de la quatrième paroi en vis-à-vis de l'utilisateur, voire une couche absorbant la lumière provenant de l'intérieur de la cabine.

Afin que le fond coloré puisse générer une meilleure saturation de couleurs, une couche de couleur neutre et sombre peut limiter la réflexion de la lumière provenant de l'intérieur de la cabine. Par exemple, une couleur sombre absorbante de type mat ou d'antireflet peut recouvrir une face de la quatrième paroi en regard de l'intérieur de la cabine. De préférence, ladite couche de couleur neutre et sombre est également semi-transparente pour permettre au dispositif d'émission d'éclairer l'intérieur de la cabine.

L'installation de l'invention peut comprendre des moyens permettant de contrôler l'intensité lumineuse et/ou la couleur d'au moins l'un desdits dispositifs d'émission de lumière mentionné ci-dessus, pour permettre d'adapter lesdits dispositifs d'émission de lumière à différentes configurations de cabine et aux propriétés de réflexion des matériaux recouvrant les parois la délimitant. Eventuellement, pour permettre une meilleure adaptabilité des dispositifs d'émission de lumière à différents agencement de la cabine, ils peuvent être calibrés de façon autonome.

### DESCRIPTION DES FIGURES

L'invention sera mieux comprise à la lecture de la description qui suit, donnée uniquement à titre d'exemple indicatif et non limitatif, et réalisée en relation avec les dessins annexés, dans lesquels les mêmes références désignent des éléments identiques ou analogues et dans lesquels :
- la figure 1 est une vue schématique d'une coupe transversale d'une installation d'acquisition de portraits photographiques, connue de l'état de la technique et telle que décrite ci-dessus ;
- la figure 2A représente un portrait photographique d'un utilisateur réalisé par une machine selon la figure 1, tel que discuté précédemment ;
- la figure 2B représente un portrait photographique d'un utilisateur réalisé par une installation selon l'invention ;
- la figure 3 est une vue schématique d'une coupe transversale d'un exemple de réalisation d'une installation d'acquisition de portraits photographiques selon l'invention ;
- la figure 4 est une vue schématique partielle d'une coupe longitudinale selon l'axe (AA') de l'installation de la figure 3 ;

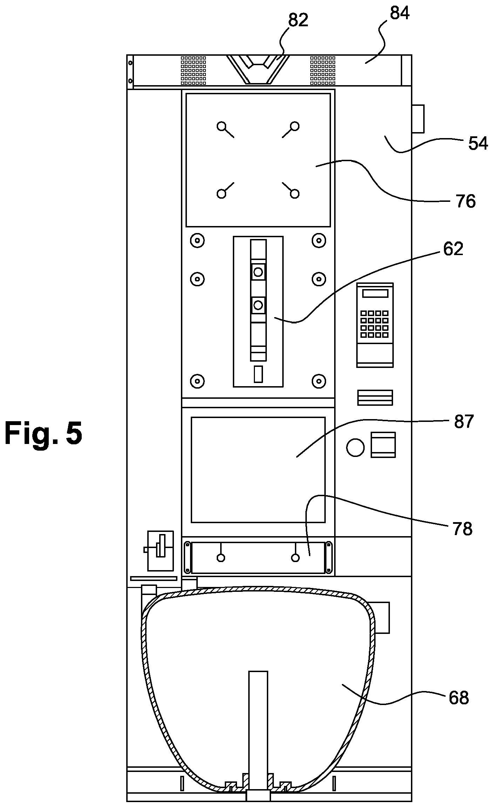

- la figure 5 est une vue schématique en section de la cabine de l'installation de l'invention.

### EXEMPLE DE REALISATION DE L'INVENTION

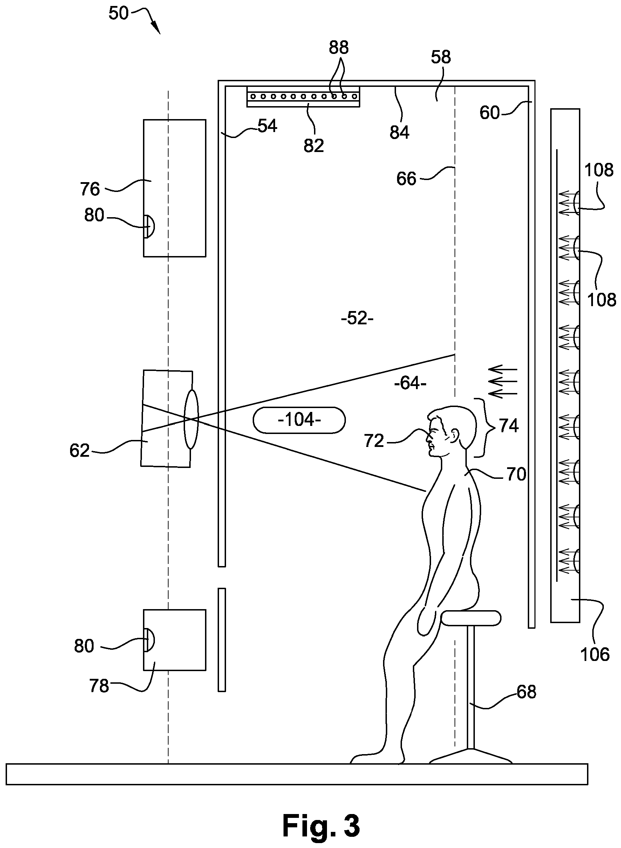

La figure 3 illustre un exemple de réalisation d'une installation d'acquisition de portraits photographiques **50** selon l'invention. Elle comprend une cabine **52** délimitée par quatre parois **54, 56, 58** et **60,** outre par le plafond **84.**

Une première paroi **54** comporte des parties transparentes afin de permettre à un appareil photographique **62** positionné derrière ladite paroi d'avoir son champ de vision **64** et son plan focal **66** à l'intérieur de la cabine. L'appareil photographique peut être de type argentique, ou, de préférence de type numérique. Il peut également être remplacé par une caméra.

Un siège **68** est présent dans la cabine pour permettre à un utilisateur **70** de s'asseoir en face et à proximité du plan focal **66** de l'appareil photographique. Plus précisément, le siège est placé de sorte à comprendre le plan focal dudit appareil photographique. Un dispositif de réglage permet à l'utilisateur de régler la position du siège pour placer son visage **72** dans une position de référence **74.** La position de référence est centrée dans le plan défini par l'intersection du champ de vision **64** et le plan focal **66** de l'appareil photographique.

L'installation **50** comporte des moyens permettant à l'utilisateur de positionner son visage dans la position de référence. Ces moyens peuvent être des indications visuelles situées devant l'appareil photographique, comme par exemple un repère pour positionner ses yeux à la bonne hauteur dans le champ de vision de l'appareil photographique.

Un premier dispositif d'émission de lumière **76** est agencé derrière une partie neutre et semi-transparente et diffusante de la première paroi **54** et au-dessus de l'appareil photographique **62.** Un deuxième dispositif d'émission de lumière **78** similaire, est également agencé derrière une partie neutre et semi-transparente et diffusante de la première paroi, mais en-dessous dudit appareil. Les premier et deuxième dispositifs d'émission de lumière comprennent chacun une ou plusieurs sources de lumière, émettant une lumière dont l'indice de rendu de couleur est typiquement supérieur à 75, avec une température comprise entre 3500K et 4500K, une intensité comprise entre 60 et 200 Lumens pour le dispositif du haut, et une intensité comprise entre 150 et 300 Lumens pour le dispositif du base, et un angle de diffusion compris entre 110° et 130° avant diffusion.

Un écran informatique d'information **87,** situé entre l'appareil photographique **62** et le deuxième dispositif d'émission de lumière **78** participe également à l'illumination du visage, typiquement à hauteur d'environ 5% de l'ensemble des sources lumineuses. En fonction de la disposition de cet écran et de son intensité, cette source de lumière peut éventuellement se substituer entièrement au deuxième dispositif d'émission de lumière **78,** ce qui représenterait alors environ 20% de l'ensemble des sources lumineuses.

Selon l'exemple de réalisation de l'invention illustré à la figure 3, les premier et deuxième dispositifs d'émission de lumière **76, 78** comprennent chacun deux LEDs **80,** émettant une lumière de couleur blanc chaud caractérisée par un indice de rendu de couleur égal à 80, une température de 4000 Kelvins, une intensité native de 560 Lumens et un angle de diffusion de 120°. Afin d'équilibrer la part des deux sources lumineuses **76** et **78,** un mécanisme électronique et logiciel permet d'atténuer indépendamment l'intensité commandée de chacune des LEDs **80.**

Les dispositifs d'émission de lumière **76** et **78** sont orientés et calibrés de sorte à éclairer la position de référence **74** dans des proportions respectives d'environ de 20% et 15% de l'ensemble des sources lumineuses. Comme indiqué ci-dessus et illustré à la figure 2A, lorsque l'utilisateur positionne de façon approximative son visage **72** par rapport à la position de référence **74,** des zones blanches et des zones sombres peuvent apparaître au niveau de son visage sur la photographie. Ces zones se forment en raison d'un éclairement non homogène de son visage par le premier et deuxième dispositif d'émission de lumière.

Afin de limiter ce phénomène, l'installation de l'invention comprend une source d'émission de lumière **82** positionnée entre le plan focal **66** de l'appareil photographique **62** et la première paroi **54** de la cabine. Pour éviter que cette source d'émission de lumière forme une ombre portée sur le visage de l'utilisateur, elle est positionnée au-dessus du premier dispositif d'émission de lumière **76.** Selon le présent exemple, elle est fixée au plafond **84** de la cabine par des moyens appropriés. De façon alternative, cette source d'émission de lumière supplémentaire peut être positionnée en-dessous du deuxième dispositif d'émission.

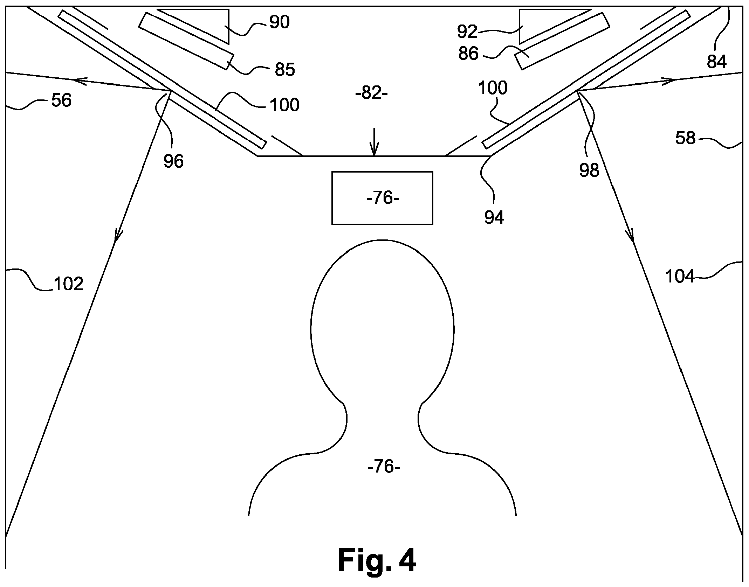

Tel qu'illustré à la figure 4, la source d'émission de lumière **82** comprend un premier et un second luminaires. Plus précisément, un premier luminaire **85** est agencé de manière à éclairer la deuxième paroi **56** délimitant la cabine et adjacente à ladite première paroi **54,** et un deuxième luminaire **86** est positionné de manière à éclairer la troisième paroi **58** de ladite cabine, faisant face à la deuxième paroi **56.** Les deuxième et troisième parois sont donc positionnées en vis-à-vis l'une de l'autre, et sécantes à la première paroi **54.**

Lesdits luminaires peuvent émettre chacun une lumière de couleur blanc chaud, dont l'indice de rendu de couleur est supérieur à 80, avec une température comprise entre 3500 et 4500 Kelvins, une intensité comprise entre 500 et 650 Lumens, et un angle de diffusion compris entre 20° et 40°.

Selon l'exemple de réalisation illustré aux figures 3 et 4, le premier et le second luminaire comprennent un alignement de LEDs **88** maintenues et orientées en vis-à-vis des parois latérales **56, 58** de la cabine par l'intermédiaire respectivement d'une première cale **90** et d'une seconde cale **92.** En d'autres termes, les agencements longitudinaux des LEDs sont sensiblement parallèles à la deuxième paroi **56** et/ou à la troisième paroi **58.** Les LEDs émettent une lumière de couleur blanc chaud, avec un indice de rendu de couleur égal à 85, une température de 4000 Kelvins, une intensité de 550 Lumens (par luminaire) et un angle de diffusion de 30°.

Afin que la source d'émission de lumière ainsi définie ne surexpose pas la partie haute du visage **72** de l'utilisateur lors de la prise des photographies, elle comprend un cache optique **94.** Le cache optique peut également protéger l'appareil photographique **62** afin que celui-ci ne soit pas ébloui directement par les luminaires **85** et **86.** Eventuellement, le cache optique peut également éviter un éclairement direct du fond de la cabine par ladite source d'émission de lumière, pour éviter un éclairement inhomogène dudit fond et pour maximiser la saturation de la couleur du fond.

Une quatrième paroi **60** clôt la cabine et forme ledit fond.

Le cache optique **94** comporte une première ouverture **96** et une seconde ouverture **98** permettant au premier et au deuxième luminaires d'éclairer au moins une partie des deuxième et troisième parois. Une paroi transparente **100** recouvre chaque ouverture **96, 98** pour protéger les luminaires de l'environnement extérieur. Avantageusement, ces parois transparentes peuvent être équipées d'un traitement antireflet du côté du luminaire pour maximiser l'éclairement des parois **56** et **58.**

Plus particulièrement, selon un mode de réalisation préféré de l'invention, les angles des cales **90** et **92** sont choisis pour que les luminaires éclairent des zones de la deuxième et troisième parois situées à la même hauteur dans la cabine que la surface délimitée par l'intersection entre le champ de vision et le plan focal de l'appareil photographique. La première et la deuxième cales inclinent par rapport au plafond **84** de la cabine, respectivement de 26,5° et de 28° le premier et le second luminaires. L'optimisation de ces angles dépend de la distance entre l'utilisateur (position de référence**74**) et les parois **56** et **58,** ainsi que la distance entre l'utilisateur et la hauteur de la source de lumière **82,** et de l'entre-axe entre les deux luminaires **85** et **86.**

Ainsi, la lumière émise par la source d'émission de lumière **82** est réfléchie sur lesdites zones formant alors une première surface diffusante émettrice de lumière **102** sur la deuxième paroi **56,** et une deuxième surface diffusante émettrice de lumière **104** positionnées devant et sur les côtés du visage **72** de l'utilisateur.

De façon avantageuse, les surfaces émettrices de lumière **102** et **104** éclairent toutes les parties du visage de l'utilisateur **70,** selon de très nombreuses directions incidentes. De ce fait, les zones sombres ou brillantes formées par le premier et/ou le deuxième dispositifs d'émission de lumière, sont éclairées par les surfaces émettrices pour que le visage soit éclairé de façon homogène.

La figure 2B illustre les avantages de l'invention, avec un portrait photographique réalisé par la machine illustrée aux figures 3 et 4. On observe un éclairement sensiblement homogène du visage de l'utilisateur sur la figure 2B par rapport à la figure 2A, malgré un positionnement approximatif de son visage par rapport à la position de référence de l'installation. L'invention permet donc de limiter le contraste d'un portrait photographique, en permettant un éclairement homogène de l'utilisateur même si celui-ci n'est pas positionné précisément selon la positon de référence. Grâce à l'invention, des photographies de meilleures qualités sont alors obtenues, quelles que soient la position, la taille de l'utilisateur, l'inclinaison et la morphologie de son visage.

Un autre avantage de l'invention est également de pouvoir diminuer l'intensité de la lumière émise par le premier et deuxième dispositifs d'émission, les surfaces émettrices compensant cette diminution d'intensité. L'éblouissement de l'utilisateur par la source d'émission de lumière **82** est alors moins important, offrant ainsi un meilleur confort d'utilisation de l'installation par l'utilisateur.

Selon une variante de réalisation de l'installation décrite ci-dessus, la quatrième paroi **60** représentée sur la figure 3 peut être au moins partiellement transparente, pour permettre à autre dispositif d'émission **106** agencé derrière ladite paroi, d'éclairer l'intérieur de la cabine. Ce quatrième dispositif d'émission comprend un réseau matriciel de LEDs **108** de différentes couleurs, par exemple bleu, rouge et vert, permettant d'éclairer le fond de la cabine selon plusieurs couleurs. Les LEDs peuvent être similaires à celles décrites ci-dessus.

Une face de la quatrième paroi peut aussi est recouverte par une couche anti-reflet (ou mate) et sombre, par exemple noire, et semi-transparente. Cette face de la quatrième paroi peut alors absorber une partie de la lumière provenant de l'intérieur de la cabine, pour permettre une saturation et une homogénéité de couleur optimale du fond de la cabine par le quatrième dispositif d'émission.

En conclusion, la présente demande propose un nouveau type d'installation d'acquisition de portraits photographiques permettant un éclairement homogène du visage d'un utilisateur, lorsque celui pose de façon approximative par rapport à une position de référence de ladite cabine. Les portraits photographiques réalisés sont ainsi de qualité, quels que soient la morphologie et le positionnement du visage de l'utilisateur au niveau de la position de référence de ladite installation. Il est alors possible d'éclairer le fond de la cabine par différents fonds de couleurs saturées en limitant les effets de reflets colorés sur les portraits réalisés.

## Revendications

1. Installation pour l'acquisition de portraits photographiques (50) constituée d'une cabine (52) délimitant un espace intérieur, comprenant :
- une première paroi (54) délimitant une partie de l'espace intérieur de la cabine, au moins une partie de la première paroi étant transparente ;
- un appareil photographique ou caméra (62) agencé derrière une partie transparente ou semi-transparente de la première paroi (54), ledit appareil comprenant un champ de vision (64) dirigé vers l'intérieur de la cabine et dont le plan focal objet (66) est situé dans ladite cabine ;
- au moins un dispositif d'émission de lumière (76) agencé derrière une partie transparente de la première paroi (54), apte à éclairer l'intérieur de la cabine ;
***caractérisée* en ce qu'**elle comprend un dispositif d'émission de lumière supplémentaire, comportant au moins deux surfaces émettrices de lumière (102, 104), éclairant l'intérieur de la cabine et agencées respectivement sur une deuxième (56) et une troisième parois (58) en regard l'une de l'autre et délimitant l'espace intérieur de la cabine (52), lesdites surfaces émettrices de lumière étant agencées :
- à gauche et à droite de l'appareil photographique (62) ; et
- entre la première paroi (54) et le plan focal (66) de l'appareil photographique ;et
- en dehors du champ de vision (64) dudit appareil.

2. Installation pour l'acquisition de portraits selon la revendication 1, ***caractérisée* en ce que** :
- la cabine comprend une première zone délimitée par le champ de vision de l'appareil photographique et son plan focal ; et
- la cabine comprend une seconde zone excluant la première zone ; et
- le dispositif d'émission de lumière supplémentaire comporte :
▪ une première et une seconde surfaces réfléchissantes disposées respectivement sur la deuxième et la troisième parois dans la deuxième zone; et
▪ une source de lumière apte à éclairer la première et la seconde surfaces réfléchissantes, ladite source de lumière étant agencées entre la deuxième et la troisième parois,
▪ la source de lumière comporte un cache optique (94) agencé de manière à ce que la source de lumière éclaire uniquement la seconde zone de la cabine.

3. Installation pour l'acquisition de portraits selon la revendication 2, ***caractérisée* en ce qu'**une face du cache optique en regard de la source d'émission de lumière est réfléchissante.

4. Installation pour l'acquisition de portraits selon la revendication 2 ou 3, ***caractérisée* en ce que** le dispositif d'émission de lumière supplémentaire comporte un cache optique agencé entre la source de lumière et chaque paroi portant les surfaces réfléchissantes (102, 104), pour limiter la valeur de l'angle de dispersion de la lumière éclairant lesdites parois, à une valeur inférieure à 90degrés.

5. Installation pour l'acquisition de portraits selon l'une des revendications 2 à 4, ***caractérisée* en ce que** la source de lumière comprend deux luminaires (85, 86), les luminaires éclairant respectivement la deuxième (102) et la troisième (104) parois de la cabine.

6. Installation pour l'acquisition de portraits selon la revendication 5, ***caractérisée* en ce que** chaque luminaire est de forme allongée et comprend un axe de plus grande dimension, ledit axe étant sensiblement parallèle à la deuxième et/ou la troisième parois(102, 104) de la cabine.

7. Installation pour l'acquisition de portraits selon l'une des revendications 2 à 6, ***caractérisée* en ce qu'**elle comprend :
- une quatrième paroi (60) délimitant l'espace intérieur de la cabine, au moins partiellement transparente, la quatrième paroi étant en regard de la première paroi (54) ;
- un dispositif d'émission de lumière additionnel (106) apte à éclairer l'intérieur de la cabine et disposé derrière la quatrième paroi.

8. Installation pour l'acquisition de portraits selon la revendication 7, ***caractérisée* en ce que** la quatrième paroi comporte une couche antireflet pour ne pas refléter la lumière provenant de l'intérieur de la cabine, une couche absorbant la lumière provenant de l'intérieur de la cabine, ou une couche de diffusion du dispositif d'émission de lumière additionnel.

9. Installation pour l'acquisition de portraits selon l'une des revendications 1 à 8, ***caractérisée* en ce qu'**elle comprend des moyens permettant de contrôler l'intensité lumineuse et/ou la couleur d'au moins l'un desdits dispositifs d'émission de lumière.

## Patentansprüche

1. Anlage zur Erfassung fotografischer Portraits (50), bestehend aus einer Kabine (52), die einen Innenraum begrenzt, umfassend::
- eine erste Wand (54), die einen Teil des Innenraums der Kabine begrenzt, dabei ist zumindest ein Teil dieser ersten Wand transparent
- einen fotografischen Apparat oder eine Kamera (62), der oder die hinter einem transparenten oder halbtransparenten Teil der ersten Wand (54) angeordnet ist, wobei der Apparat ein Sichtfeld (64) umfasst, das auf das Innere der Kabine gerichtet ist und dessen Objekt- Brennebene (66) sich in der Kabine befindet;
- mindestens eine Lichtemissionsvorrichtung (76), die hinter einem transparenten Teil der ersten Wand (54) angeordnet ist und das Innere der Kabine beleuchten kann. ***dadurch gekennzeichnet, dass*** sie mindestens eine zusätzliche Lichtemissionsvorrichtung enthält, die mindestens zwei lichtemittierende Flächen (102, 104) enthält, die das Innere der Kabine beleuchten und jeweils an einer zweiten (56) und einer dritten Wand (58) angeordnet sind, die einander gegenüberliegen und den Innenraum der Kabine (52) begrenzen, diese lichtemittierenden Flächen (76) sind
- links und rechts des fotografischen Apparates (62) angeordnet; und
- zwischen der ersten Wand (54) und der Brennebene (66) des fotografischen Apparates; und
- außerhalb des Sichtfeldes (64) dieses Apparates.

2. Anlage zur Erfassung fotografischer Portraits nach Anspruch 1, ***dadurch gekennzeichnet, dass:***
- die Kabine eine erste Zone enthält, die vom Sichtfeld des fotografischen Apparates und seiner Brennebene begrenzt wird; und
- die Kabine eine zweite Zone enthält, die die erste Zone ausschließt; und
- diese zusätzliche Lichtemissionsvorrichtung enthält:
• eine erste und eine zweite reflektierende Oberfläche, die jeweils auf der zweiten und dritten Wand in der zweiten Zone angeordnet ist; und
• eine Lichtquelle, die in der Lage ist, die erste und zweite reflektierende Oberfläche zu beleuchten, diese Lichtquelle, ist zwischen der zweiten und dritten Wand angeordnet,
• die Lichtquelle enthält eine Objektivabdeckung (94), die so angeordnet ist, dass die Lichtquelle nur die zweite Zone der Kabine beleuchtet.

3. Anlage zur Erfassung fotografischer Portraits nach Anspruch 2, ***dadurch gekennzeichnet, dass*** eine Seite der Objektivabdeckung, gegenüber der lichtemittierenden Quelle reflektierend ist.

4. Anlage zur Erfassung fotografischer Portraits nach Anspruch 2 oder 3, ***dadurch gekennzeichnet, dass*** die zusätzliche Lichtemissionsvorrichtung eine Objektivabdeckung enthält, die zwischen der Lichtquelle und jeder Wand mit reflektierenden Oberflächen (102, 104) angeordnet ist, um den Wert des Streuungswinkels des Lichtes, das diese Wände beleuchtet auf einen Wert unter 90 Grad zu begrenzen.

5. Anlage zur Erfassung fotografischer Portraits nach einem der Ansprüche 2 bis 4, ***dadurch gekennzeichnet, dass*** die Lichtquelle zwei Leuchtkörper (85, 86) enthält, diese Leuchtkörper beleuchten jeweils die zweite (102) und die dritte (104) Wand der Kabine.

6. Anlage zur Erfassung fotografischer Portraits nach Anspruch 5, ***dadurch gekennzeichnet, dass jeder*** Leuchtkörper eine längliche Form hat und eine Achse mit längeren Maßen enthält, diese Achse ist im Wesentlichen parallel zur zweiten und/ oder dritten Wand (102, 104) der Kabine.

7. Anlage zur Erfassung fotografischer Portraits nach Anspruch 2 bis 6, ***dadurch gekennzeichnet, dass*** sie umfasst:
- eine zumindest teilweise transparente vierte Wand (60), die den Innenraum der Kabine begrenzt, die vierte Wand wiederum befindet sich gegenüber der ersten Wand (54),
- eine zusätzliche Lichtemissionsvorrichtung (106), die in der Lage ist, das Kabineninnere zu beleuchten und die hinter der vierten Wand angeordnet ist.

8. Anlage zur Erfassung fotografischer Portraits nach Anspruch 7, ***dadurch gekennzeichnet, dass*** die vierte Wand eine Antireflex- Schicht enthält, um das Licht, das aus dem Kabineninneren kommt, nicht zu reflektieren, eine Schicht, die das Licht aus dem Kabineninneren absorbiert oder einer Schicht zur Streuung der zusätzlichen Lichtemissionsvorrichtung.

9. Anlage zur Erfassung fotografischer Portraits nach einem der Ansprüche 1 bis 8, ***dadurch gekennzeichnet, dass*** sie Mittel umfasst, die eine Steuerung der Lichtstärke und/ oder der Farbe mindestens einer dieser Lichtemissionsvorrichtungen ermöglichen.

## Claims

1. A photographic portrait acquisition installation (50) formed of a booth (52) delimiting an inner space, comprising:
- a first wall (54) delimiting a portion of the inner space of the booth, at least a portion of the first wall being transparent;
- a photographic apparatus or camera (62) arranged behind a transparent or semi-transparent portion of the first wall (54), said device comprising a field of view (64) directed towards the inside of the booth and having its object focal plane (66) located inside of said booth;
- at least one light-emitting device (76) arranged behind a transparent portion of the first wall (54), capable of illuminating the inside of the booth;
wherein it comprises an additional light-emitting device, comprising at least two light-emitting surfaces (102, 104), illuminating the inside of the booth and respectively arranged on a second (56) and a third walls (58) facing each other and delimiting the inner space of the booth (52), said light-emitting surfaces being arranged:
- to the left and to the right of the photographic apparatus (62); and
- between the first wall (64) and the focal plane (66) of the photographic apparatus; and
- outside of the field of view (64) of said device.

2. The portrait acquisition installation of claim 1:
- wherein the booth comprises a first area delimited by the field of view of the photographic apparatus and its focal plane;
- wherein the booth comprises a second area excluding the first area; and
- wherein the additional light-emitting device comprises:
▪ a first and a second reflective surfaces, respectively arranged on the second and the third walls in the second area; and
▪ a light source capable of illuminating the first and the second reflective surfaces, said light source being arranged between the first and the third wall s,
▪ the light source comprising an optical cache (94) arranged so that the light source only illuminates the second area of the booth.

3. The portrait acquisition installation of claim 2, wherein a surface of the optical cache opposite the light-emitting source is reflective.

4. The portrait acquisition installation of claim 2, wherein the additional light-emitting device comprises an optical cache arranged between the light source and each wall supporting the reflective surfaces (102, 104), to limit the value of the angle of dispersion of the light illuminating said walls to a value smaller than 90 degrees.

5. The portrait acquisition installation of claim 2, wherein the light source comprises two lighting elements (85, 86), the lighting elements respectively illuminating the second (102) and the third (104) walls of the booth.

6. The portrait acquisition installation of claim 5, wherein each lighting element has an elongated shape and comprises an axis of larger dimension, said axis being substantially parallel to the second and/or the third walls (102, 104) of the booth.

7. The portrait acquisition installation of claim 2, wherein it comprises:
- a fourth wall (60) delimiting the inner space of the booth, at least partly transparent, the fourth wall being located opposite the first wall (54);
- an additional light-emitting device (106) capable of illuminating the inside of the booth and arranged behind the fourth wall.

8. The portrait acquisition installation of claim 7, wherein the fourth wall comprises an antireflection layer to avoid reflecting the light originating from the inside of the booth, a layer absorbing the light originating from the inside of the booth, or a diffusion layer of the additional light-emitting device.

9. The portrait acquisition installation of claim 1, wherein it comprises means enabling to control the light intensity and/or the color of at least one of said light-emitting devices.
